# EUROPEAN PATENT APPLICATION

(11) **EP 3 282 666 A1**
(43) Date of publication of application: **14.02.2018**
(21) Application number: 16776067.7
(22) Date of filing: 21.03.2016
(51) Int. Cl.: H04L 29/06, G06Q 50/26

(54) **ADDRESS MATCHING-BASED RISK IDENTIFICATION METHOD AND DEVICE**

(30) Priority: 09.04.2015 CN 201510166871
(71) Applicant: Alibaba Group Holding Limited, Grand Cayman (KY)
(72) Inventor: XU, Min, Hangzhou 310099 (CN); XU, Kai, Hangzhou 310099 (CN); HE, Dijun, Hangzhou 310099 (CN)
(74) Representative: Conroy, John
(86) International application number: PCT/CN2016/076883
(87) International publication number: WO 2016/161892

(57) **Abstract**

The present application relates to the field of network technologies, in particular to an address matching-based risk identification method and apparatus, which are used for providing a risk identification solution through address authentication. The address matching-based risk identification method provided by the embodiment of the present application comprises: receiving risk authentication request information, the risk authentication request information comprising identity identification information of a user who requests processing of a service and first address coding information used for identifying a first address; determining stored second address coding information corresponding to the identity identification information and used for identifying a second address; and judging whether the first address is consistent with the second address by matching the first address coding information with the second address coding information, and performing risk identification according to the obtained address matching result.

## Description

### Technical Field

The present application relates to the field of network technologies, in particular to an address matching-based risk identification method and apparatus.

### Background Art

At present, in a process of making a response to a service processing request of a user, risk identification is performed mainly through matching and authentication of digital information. For example, whether a processing request of a current user has a risk is judged by authenticating whether information such as credit card number, expiration date, mobile phone number and ID number and the like is correct.

The applicant finds that performing risk identification for a user by adopting address information authentication plays a more important role. For example, if a shipping address input by a user in a processing request is not consistent with a credit card billing address of the user, it indicates that the current processing request possibly has a user identity embezzlement risk.

In a risk identification scenario, there is a strong demand for address information authentication. However, since there is a comparatively great difficulty in literally performing address information authentication, no solution for performing risk identification through Chinese address authentication has been provided in the prior art. In addition to Chinese, similarly there is a comparatively great difficulty in matching addresses in other languages, and the reliability of matching results is comparatively low.

### Summary of the Invention

Embodiments of the present application provide an address matching-based risk identification method and apparatus, which are used for providing a solution for performing risk identification through address information authentication.

An embodiment of the present application provides an address matching-based risk identification method, comprising:
receiving risk authentication request information, the risk authentication request information comprising identity identification information of a user who requests processing of a service and first address coding information used for identifying a first address;
determining stored second address coding information corresponding to the identity identification information and used for identifying a second address; and
judging whether the first address is consistent with the second address by matching the first address coding information with the second address coding information, and performing risk identification according to the obtained address matching result.

Alternatively, the first address coding information and the second address coding information are address information which is identified by adopting numbers and/or letters.

Alternatively, the step of performing risk identification according to the obtained address matching result comprises:
when the address matching result is that the first address is not consistent with the second address, determining that the service requested to be processed by the user currently has a risk.

Alternatively, the identity identification information is fuzzified identity identification information, and the fuzzified identity identification information comprises partial information in each type of complete identity identification information in a plurality of types of complete identity identification information; and
the step of determining stored second address coding information corresponding to the fuzzified identity identification information comprises:
judging whether user information matching the fuzzified identity identification information is stored; and
if it is determined that the user information matching the fuzzified identity identification information is stored, extracting the second address coding information from the user information.

Alternatively, if it is determined that the user information matching the fuzzified identity identification information is not stored, the method further comprises:
feeding back information which indicates that user matching fails.

Alternatively, the service is a network transaction service, the first address is a billing address and the second address is a logistic shipping address.

Alternatively, the method further comprises:
determining first credit record information corresponding to the first address coding information and second credit record information corresponding to the identity identification information; and
determining risk rating information of the user used for performing risk identification based on the first credit record information and the second credit record information.

Alternatively, the first credit record information comprises one or more pieces of the following information:
address validity grade information of the first address indicated in the first address coding information;
information indicating whether a fraud case related to the first address occurs within a recent first set time length; and
information indicating at least one of occurrence times of fraud cases related to the first address within a recent second set time length, amounts of fraud cases related to the first address within a recent second set time length, and a quantity proportion of such cases in all fraud cases,
wherein the first set time length is smaller than the second set time length.

Alternatively, the second credit record information comprises one or more pieces of the following information:
information indicating whether the user is a blacklist user, the blacklist user being a user having a bad credit record;
information indicating whether the user has an association with a blacklist user;
information indicating whether the user has an association with a user having a fraud behavior within a recent third set time length;
information indicating whether the user has a fraud behavior or whether the user has an association with a fraud case; and
information indicating the number of server terminals through which the user applies for services within a recent fourth set time length.

Alternatively, the services are pre-loan application services or online application crediting services; the second credit record information comprises information indicating the number of server terminals through which the user applies for services within a recent fourth set time length; and
the method further comprises:
determining an application degree level, to which the number of server terminals through which the user applies for services within the recent fourth set time length belongs, for performing risk identification.

Alternatively, before the risk authentication request information is received, the method further comprises:
receiving an address coding request carrying the first address;
determining coding values respectively corresponding to address contents at each level obtained after division according to a stored corresponding relation between address contents at different levels and coding values and the address contents at each level obtained by dividing the first address, wherein a geographical range corresponding to an address content at a level which is not the lowest contains a plurality of geographical ranges corresponding to address contents at a level lower than the level; and
combining the coding values respectively corresponding to the address contents at each level obtained after division in a descending order of the levels to form an address coding value corresponding to the first address, and feeding back address coding information containing the address coding value.

Alternatively, the address coding information further contains address validity grade information; and
the address validity grade information is determined according to the following steps:
determining an affiliation relation between address contents at different levels in the first address based on the coding values respectively corresponding to the address contents at each level in the first address and a stored superior-subordinate relation between different coding values; and
determining the address validity grade information of the first address according to the determined affiliation relation and invalid address contents, in the first address, which have no corresponding relation with the coding values.

An embodiment of the present application provides an address matching-based risk identification apparatus, comprising:
a receiving module configured to receive risk authentication request information, the risk authentication request information comprising identity identification information of a user who requests processing of a service and first address coding information used for identifying a first address;
a determination module configured to determine stored second address coding information corresponding to the identity identification information and used for identifying a second address; and
a matching module configured to judge whether the first address is consistent with the second address by matching the first address coding information with the second address coding information, and perform risk identification according to the obtained address matching result.

The embodiments of the present application can introduce the address matching result into risk identification, and the accuracy of performing risk identification on the current processing request of the user is increased. In the preferred implementation mode of the present application, the embodiments of the present application perform user identification by adopting the fuzzified identity identification information of the user, the risk of user information leakage is reduced and the privacy of the user is protected.

### Description of the Drawings

FIG. 1 is a flowchart of an address matching-based risk identification method provided by Embodiment 1 of the present application;
FIG. 2 is a flowchart of an address matching-based risk identification method provided by Embodiment 2 of the present application;
FIG. 3 is a flowchart of an address matching-based risk identification method provided by Embodiment 3 of the present application;
FIG. 4 is a flowchart of an address matching-based risk identification method provided by Embodiment 4 of the present application;
FIG. 5 is a flowchart of an address matching-based risk identification method provided by Embodiment 5 of the present application;
FIG. 6 is a schematic structural diagram of an address matching-based risk identification apparatus provided by Embodiment 6 of the present application;
FIG. 7 is a schematic structural diagram of an address matching-based risk identification apparatus provided by Embodiment 7 of the present application.

### Detailed Description

In embodiments of the present application, an address authentication process is realized by adopting address coding information. Specifically, after risk authentication request information carrying identity identification information of a user and first address coding information used for identifying a first address is received, stored second address coding information corresponding to the identity identification information and used for identifying a second address is determined; and whether the first address is consistent with the second address is judged by matching the first address coding information with the second address coding information, and risk identification is performed according to the obtained address matching result.

Accordingly, it can be seen that the embodiments of the present application can introduce the address matching result into risk identification, and the accuracy of performing risk identification on the current processing request of the user is increased. In a preferred implementation mode of the present application, the embodiment of the present application performs user identification by adopting fuzzified identity identification information of the user, the risk of user information leakage is reduced and the privacy of the user is protected.

The embodiments of the present application will be further described in detail below with reference to the drawings.

### Embodiment 1

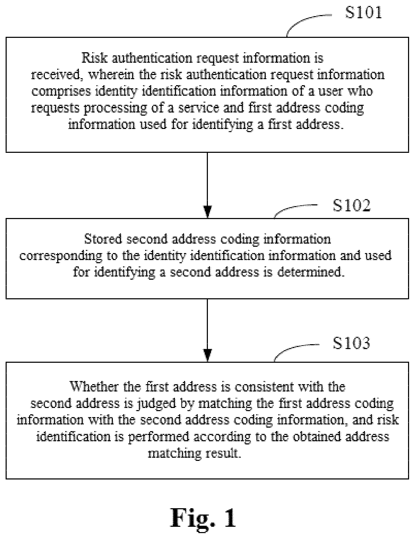

As illustrated in FIG. 1 which is a flowchart of an address matching-based risk identification method provided by Embodiment 1 of the present application, the method comprises the following steps:
S101, risk authentication request information is received, wherein the risk authentication request information comprises identity identification information of a user who requests processing of a service and first address coding information used for identifying a first address.

The embodiment of the present application may be implemented in any risk identification products. Besides, any other possible application scenarios are all included in the protection scope of the embodiment of the present application. The embodiment of the present application mainly describes matching aiming at Chinese addresses. Of course, in addition to Chinese, matching of addresses in any other languages may also be performed by adopting an address coding mode provided by the embodiment of the present application.

An executing subject of the embodiment of the present application may be considered as a server for performing risk identification. During the specific implementation, the server may be simultaneously used as a service server terminal to provide service processing for users, or does not have a function of a service server terminal and is only responsible for performing risk identification based on a request of a service server terminal. Based on this, in the above-mentioned S101, receiving the risk authentication request message specifically may refer to receiving risk authentication request information sent by a service server terminal (a server for performing risk identification and a service server terminal are different devices), or may refer to receiving risk authentication request information of user equipment, and at this moment, the risk authentication request information actually may be service request information (a server for performing risk identification and a service server terminal are the same device).

The above-mentioned identity identification information may be one or more pieces of information such as a name, an ID number, a mobile phone number, a bank card number, and the like of a user. Address coding information is information obtained after address information is digitalized and/or symbolized; and in the embodiment of the present application, a digitalized address coding mode is preferred. In the embodiment of the present application, an address coding service may be provided in addition to original services, i.e., before S101, the method further comprises: receiving an address coding request carrying the first address; determining coding values respectively corresponding to address contents at each level obtained after division according to a stored corresponding relation between address contents at different levels and coding values and the address contents at each level obtained by dividing the first address, wherein a geographical range corresponding to an address content at a level which is not the lowest contains a plurality of geographical ranges corresponding to address contents at a level lower than the level; and combining the coding values respectively corresponding to the address contents at each level obtained after division in a descending order of the levels to form an address coding value corresponding to the first address, and feeding back address coding information containing the address coding value.

Herein, a server for performing risk identification in the embodiment of the present application can provide a function of specially providing address codes. Under a situation in which the service server terminal and the server for performing risk identification in the embodiment of the present application are different devices, the service server terminal may firstly send an address coding request carrying the first address to the server for performing risk identification in the embodiment of the present application, and then send risk authentication request information to the server for performing risk identification in the embodiment of the present application based on address coding information after the address coding information is obtained. Or, the service server terminal may also directly send risk authentication request information comprising identity identification information of a user who requests processing of a service and the first address to the server for performing risk identification in the embodiment of the present application, and the server for performing risk identification in the embodiment of the present application maps the first address to address coding information and then performs address matching.

During the specific implementation, an address may be divided into more than ten levels of address contents (or called as standardized fields), including province, city, district/county, town, road, house number, building number, unit, room number, Point of Interest (POI), etc., an address content at each level is respectively mapped to an N-bit coding value, and for example, N may be 2; by taking some provinces/municipalities as an example, coding values of different provinces/municipalities may be respectively as follows: Beijing: 10, Shanghai: 20, Tianjin: 30, Chongqing: 40, Heilongjiang: 11, Jilin: 12, Liaoning: 13, Inner Mongolia: 15, Hebei: 31, Shanxi: 32, Jiangsu: 21, Zhejiang: 22, etc.; and then the coding values corresponding to the address contents of the address at each level are sequentially arranged according to address content ranges from large to small to obtain an address coding value corresponding to the address. Under an actual risk identification scenario, in consideration of needs of user privacy and risk identification, three to five levels of address contents may be selected to perform risk identification; and herein, coding values corresponding to address contents at the same level are different, and coding values corresponding to address contents at different levels may be the same and may also be different.

Alternatively, the address coding information further contains address validity grade information; and the address validity grade information may be specifically determined according to the following steps:
an affiliation relation between address contents at different levels in the first address is determined based on the coding values respectively corresponding to the address contents at each level in the first address and a stored superior-subordinate relation between different coding values; and the address validity grade information of the first address is determined according to the determined affiliation relation and invalid address contents, in the first address, which have no corresponding relation with the coding values.

During the specific implementation, whether there is a correct affiliation relation between address contents at different levels in the first address may be judged based on a stored superior-subordinate relation between different coding values (for example, there is a superior-subordinate relation between a coding value 20 corresponding to Shanghai and a coding value 51 corresponding to Changning District, Shanghai) and the determined coding values respectively corresponding to the address contents at each level in the first address.

For example, numbers 0-5 may be adopted to represent address validity grades (the address validity grades are sequentially 0-5 from low to high). If an address coding value of the first address is 1051**, wherein 10 represents Beijing, 51 represents Changning District and ** represents invalid address contents, since there is no superior-subordinate relation between the coding value 51 which represents Changning District and the coding value 10 which represents Beijing in a stored address information base (Changning District itself is not a district that belongs to Beijing), the first address is invalid and number 0 may be adopted to represent the address validity grade of the first address. The authentication of address validity will be further described below in Embodiment 5.

S102, stored second address coding information corresponding to the identity identification information and used for identifying a second address is determined.

Herein, if the service requested to be processed by the user is a network transaction service and the risk authentication request information is sent by a service server terminal which is different from the server for performing risk identification in the embodiment of the present application, the first address may be a billing address (this billing address may be a home address, an office address or the like) provided by the service server terminal (such as a bank), and the second address may be a logistic shipping address provided by the user during online transaction. If the service requested to be processed by the user is a pre-loan application or online application crediting service, the first address may be a billing address of the user provided by the service server terminal (such as a bank), and the second address may be various pieces of address information of the user acquired from the user information base in the embodiment of the present application, including a logistic shipping address, an office address, a home address, etc. If the service requested to be processed by the user is a network transaction service and the server itself for performing risk identification in the embodiment of the present application is a service server terminal, the first address may be a logistic shipping address sent by user equipment, and the second address may be a billing address saved by the server for performing risk identification in the embodiment of the present application.

S103, whether the first address is consistent with the second address is judged by matching the first address coding information with the second address coding information, and risk identification is performed according to the obtained address matching result.

Herein, the second address coding information in the user information base provided by the embodiment of the present application is matched with the first address coding information sent by the server terminal, whether the second address indicated by the second address coding information is consistent with the first address indicated by the first address coding information is judged, and "consistent" herein may include the following situations: the first address coding information and the second address coding information are fully the same, or partial information of the first address coding information and the second address coding information is the same while other information is not in conflict. For example, the first address coding information indicates that the first address is Chaoyang District, Beijing, the second address coding information indicates that the second address is Shaoyaojubeili, Chaoyang District, Beijing, partial information of the first address coding information is the same as partial information of the second address coding information, the address content "Shaoyaojubeili" indicated by partial information, which is different from partial information in the first address coding information, in the second address coding information, is not in conflict with the first address, and at this moment it may also be considered that the second address is consistent with the first address.

After an address matching result is obtained, risk identification may be performed on the service requested to be processed by the user currently based on the address matching result. Herein, if the server itself for performing risk identification in the embodiment of the present application is a service server terminal, a risk identification result may be directly determined based on the address matching result. For example, when the address matching result is that the first address is not consistent with the second address, it is determined that the service requested to be processed by the user currently has a risk and the processing of the service is controlled based on the risk identification result. If the risk authentication request information is sent by a service server terminal which is different from the server for performing risk identification in the embodiment of the present application, the address matching result may be sent to the service server terminal and the service server terminal performs risk identification and controls the processing of the service, or risk identification may also be firstly performed and then the risk identification result is fed back to the service server terminal. For example, when the address matching result is that the first address is not consistent with the second address, response information indicating that the service requested to be processed by the user currently has a risk is fed back to the service server terminal.

In addition to directly determining the risk identification result based on the address matching result, the risk identification result may also be determined in combination with specific service scenarios. For example, if the service requested to be processed by the user is a network transaction service, when address matching fails, e.g., when a shipping address of the user during network transaction is not consistent with a billing address of a used credit card and an amount of transaction at this time is huge, it is judged that the transaction at this time has a risk, information authentication may be further performed for the user to verify whether the credit card used for the transaction is in a stolen state, and finally whether to provide a transaction payment service for the user is determined.

In Embodiment 2 as follow, user identification is performed by adopting fuzzified identity identification information of the user, and thus the risk of user information leakage can be reduced and the privacy of the user is protected.

Embodiments 2-5 as follows will be described from the perspectives that the service server terminal and the server for performing risk identification in the embodiment of the present application are different devices and the service server terminal sends the risk authentication request information to the server for performing risk identification in the embodiment of the present application.

### Embodiment 2

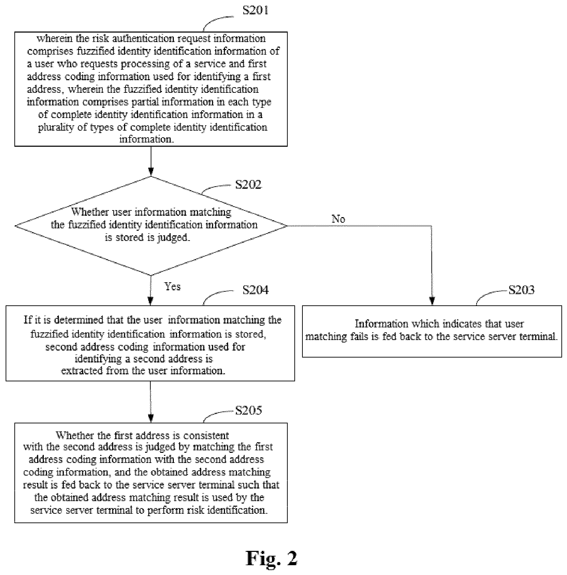

As illustrated in FIG. 2 which is a flowchart of an address matching-based risk identification method provided by Embodiment 2 of the present application, the method comprises the following steps:
S201, risk authentication request information sent by a service server terminal is received, wherein the risk authentication request information comprises fuzzified identity identification information of a user who requests processing of a service and first address coding information used for identifying a first address, wherein the fuzzified identity identification information comprises partial information in each type of complete identity identification information in a plurality of types of complete identity identification information.

Herein, the fuzzified identity identification information of the user comprises a plurality of types of identity identification information, and each type of identity identification information is partial information in a corresponding type of complete identity identification information. For example, it may comprise at least two of a fuzzified name, a fuzzified mobile phone number, a fuzzified ID number and a fuzzified card number; herein, the fuzzified name may be a family name or a given name in a user name; the fuzzified mobile phone number may be partial numbers in a user mobile phone number and specifically may be customized according to application scenarios, and for example, it may be first three numbers, last four numbers or the like of the mobile phone number; the fuzzified ID number may be partial numbers in a user ID number and specifically may be customized according to application scenarios, and for example, it may be last four numbers of the ID number; and the fuzzified card number may be partial numbers in a user card number (such as a credit card number, a bank card number, and the like) and specifically may be customized according to application scenarios, and for example, it may be first six numbers, last four numbers or the like of the card number.

S202, whether user information matching the fuzzified identity identification information is stored is judged.

S203, if it is determined that the user information matching the fuzzified identity identification information is not stored, information which indicates that user matching fails is fed back to the service server terminal.

After the risk authentication request information is received, user matching is firstly performed; specifically, whether there is user information of a user matching fuzzified identity identification information indicated by the risk authentication request information is judged based on user information in a maintained user information base; if so, it indicates that user matching succeeds and risk authentication is continuously performed; otherwise, information which indicates that user matching fails is fed back to the service server terminal.

S204, if it is determined that the user information matching the fuzzified identity identification information is stored, second address coding information used for identifying a second address is extracted from the user information.

Herein, after the user information of the user matching the fuzzified identity identification information is searched, second address coding information of the user is extracted from the user information.

S205, whether the first address is consistent with the second address is judged by matching the first address coding information with the second address coding information, and the obtained address matching result is fed back to the service server terminal such that the obtained address matching result is used by the service server terminal to perform risk identification.

Herein, a risk identification result may also be firstly determined based on the obtained address matching result, then the risk identification result is fed back to the service server terminal, and for example, if the first address is not consistent with the second address, it is indicated to the service server terminal that the current service processing has a risk.

In the embodiment of the present application, the service requested to be processed by the user may be any one of a network transaction service, a pre-loan application service, an online application crediting service and the like, wherein, for the network transaction service, risk rating information of the user may also be determined in combination with a credit record of the user in addition to the address matching result, and the service server terminal or the server for performing risk identification in the embodiment of the present application may perform risk identification in combination with the address matching result and the risk rating information. Herein, when the service server terminal and the server for performing risk identification in the embodiment of the present application are different devices, the server for performing risk identification in the embodiment of the present application may send the address matching result and the risk rating information to the service server terminal, and may also determine a risk identification result based on the address matching result and the risk rating information and then send the risk identification result to the service server terminal. During the specific implementation, address information carried in a transaction message between the server for performing risk identification in the embodiment of the present application and the service server terminal is transmitted in a digital form. On one hand, potential information security hazards caused by interception of the message by a third party in a transmission process can be avoided; and on the other hand, message bytes can be effectively reduced and the transmission efficiency is improved. For example, for a UnionPay standard transaction message (8583 message), two reserved domains therein may be used for transmitting the address coding information and feeding back the risk rating information.

For the pre-loan application service and the online application crediting service, application degree rating information of the user may also be determined in combination with a recent service situation of the user in addition to the address matching result and the risk rating information, and the service server terminal or the server for performing risk identification in the embodiment of the present application may perform risk identification on the current service of the user in combination with the address matching result, the risk rating information and the application degree rating information. Herein, when the service server terminal and the server for performing risk identification in the embodiment of the present application are different devices, the server for performing risk identification in the embodiment of the present application may send the address matching result, the risk rating information and the application degree rating information to the service server terminal, and may also determine a risk identification result based on the address matching result, the risk rating information and the application degree rating information and then send the risk identification result to the service server terminal.

Besides, the embodiment of the present application may also separately provide a function of address validity verification, i.e., authenticating whether the user address sent by the service server terminal is real and valid. During the specific implementation, the service server terminal may carry a specific service scenario code in the sent risk authentication request information or address validity authentication request message, so as to determine specific authentication services required by the service server terminal in the embodiment of the present application. For example, a service scenario code of the pre-loan application service may be 01, a service scenario code of the online application crediting service may be 02, a service scenario code of the network transaction service may be 03, and a service scenario code of the address validity authentication service may be 04, etc.

Specific introduction will be made below through contents of Embodiments 3-5.

### Embodiment 3

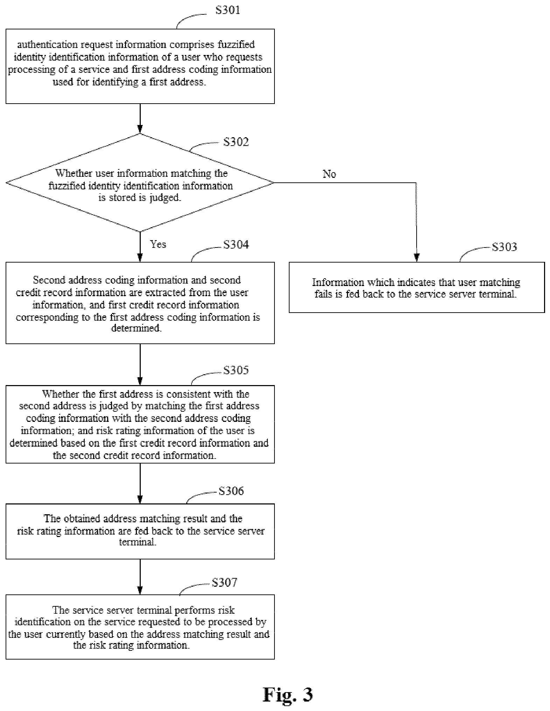

As illustrated in FIG. 3 which is a flowchart of an address matching-based risk identification method provided by Embodiment 3 of the present application, the method comprises the following steps:
S301, risk authentication request information sent by a service server terminal is received, wherein the risk authentication request information comprises fuzzified identity identification information of a user who requests processing of a service and first address coding information used for identifying a first address.
S302, whether user information matching the fuzzified identity identification information is stored is judged.
S303, if it is determined that the user information matching the fuzzified identity identification information is not stored, information which indicates that user matching fails is fed back to the service server terminal.
S304, if it is determined that the user information matching the fuzzified identity identification information is stored, second address coding information used for identifying a second address and second credit record information are extracted from the user information, and first credit record information corresponding to the first address coding information is determined.

During the specific implementation, the first credit record information comprises one or more pieces of the following information:
1) Address validity grade information of the first address indicated in the first address coding information. Herein, in a process of performing digital mapping of an address, fuzzy matching and information auto-completion processes are possibly involved, thus a problem of address validity exists. A number (such as 0-5) may be added into the address coding information obtained after mapping in order to identify the validity of the address coding information, and the greater the number is, the higher the validity of the address coding information is. For example, if number 0 is added, it represents that the first address is invalid, and if number 5 is added, it represents that the first address is valid.
2) Information indicating whether a fraud case related to the first address occurs within a recent first set time length.
3) Information indicating at least one of occurrence times of fraud cases related to the first address within a recent second set time length, amounts of fraud cases related to the first address within a recent second set time length, and a quantity proportion of such cases in all fraud cases.

Herein, the first set time length is smaller than the second set time length. For example, the recent first set time length is recent three months and the recent second set time length is recent one year.

During the specific implementation, the second credit record information comprises one or more pieces of the following information:
1) Information indicating whether the user is a blacklist user, wherein the blacklist user is a user having a bad credit record.
2) Information indicating whether the user has an association with a blacklist user.
3) Information indicating whether the user has an association with a user having a fraud behavior within a recent third set time length.
4) Information indicating whether the user has a fraud behavior or whether the user has an association with a fraud case.
5) Information indicating the number of server terminals through which the user applies for services within a recent fourth set time length.

Herein, the third set time length and the fourth set time length may be the same and may also be different. For example, the recent third set time length may be recent one year and the recent fourth set time length may be recent three months.

S305, whether the first address is consistent with the second address is judged by matching the first address coding information with the second address coding information; and risk rating information of the user is determined based on the first credit record information and the second credit record information.

During the specific implementation, an Analytic Hierarchy Process (AHP) scoring algorithm may be adopted to perform weighting summation on risk rating scores corresponding to each type of credit record information and to determine a final risk rating score (for example, it may be valued at 0-10, and the higher the risk score is, the higher the risk degree is or the lower the risk degree is). During the specific application, risk scores respectively corresponding to different results of each type of credit record information may be set in detail.

S306, the obtained address matching result and the risk rating information are fed back to the service server terminal.

S307, the service server terminal performs risk identification on the service requested to be processed by the user currently based on the address matching result and the risk rating information.

Herein, the address matching result influences the credibility of the risk rating information. If address matching succeeds, it indicates that the credibility of the risk rating information is higher; and if address matching fails, it indicates that the credibility of the risk rating information is lower.

### Embodiment 4

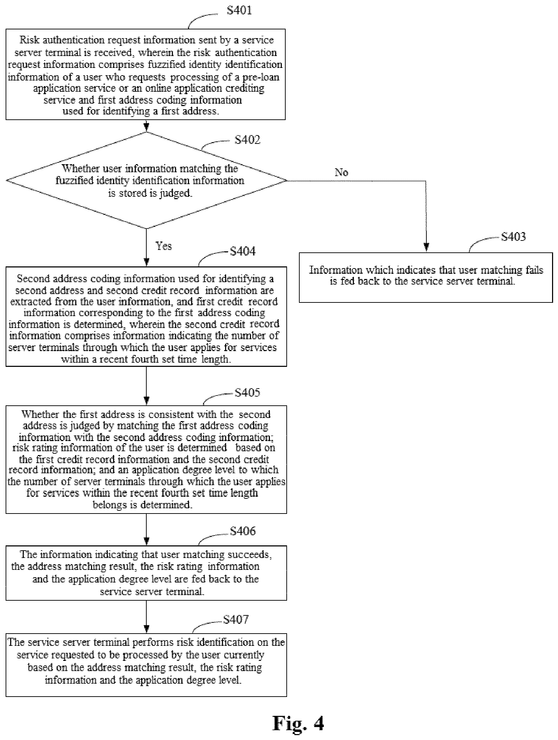

As illustrated in FIG. 4 which is a flowchart of an address matching-based risk identification method provided by Embodiment 4 of the present application, the method comprises the following steps:
S401, risk authentication request information sent by a service server terminal is received, wherein the risk authentication request information comprises fuzzified identity identification information of a user who requests processing of a pre-loan application service or an online application crediting service and first address coding information used for identifying a first address.
S402, whether user information matching the fuzzified identity identification information is stored is judged.
S403, if it is determined that the user information matching the fuzzified identity identification information is not stored, information which indicates that user matching fails is fed back to the service server terminal.
S404, if it is determined that the user information matching the fuzzified identity identification information is stored, second address coding information used for identifying a second address and second credit record information are extracted from the user information, and first credit record information corresponding to the first address coding information is determined, wherein the second credit record information comprises information indicating the number of server terminals through which the user applies for services within a recent fourth set time length.
S405, whether the first address is consistent with the second address is judged by matching the first address coding information with the second address coding information; risk rating information of the user is determined based on the first credit record information and the second credit record information; and an application degree level to which the number of server terminals through which the user applies for services within the recent fourth set time length belongs is determined.

For example, application degree levels may be divided into three levels, i.e., high level, medium level and low level, wherein the low level corresponds to the number of server terminals, through which services are applied (i.e., the number of organizations to which applications are made), which is smaller than or equal to 2, the high level corresponds to the number of server terminals, through which services are applied (i.e., the number of organizations to which applications are made), which is greater than or equal to 5, and the medium level corresponds to the number of server terminals, through which services are applied (i.e., the number of organizations to which applications are made), which is greater than 2 and smaller than 5.

S406, the information indicating that user matching succeeds, the address matching result, the risk rating information and the application degree level are fed back to the service server terminal.

S407, the service server terminal performs risk identification on the service requested to be processed by the user currently based on the address matching result, the risk rating information and the application degree level.

Herein, the service server terminal performs risk identification on the service requested to be processed by the user currently in combination with the address matching result, the risk rating information and the application degree level. For example, if address matching fails, the risk rating information indicates that the risk degree is higher and the application degree level indicates that the number of server terminals through which the user applies for services recently (i.e., the number of organizations to which applications are made) is greater, it indicates that the risk degree of the service requested to be processed by the user currently is higher, and service risk control may be performed for the user, e.g., the user is denied a service, or further information authentication is performed for the user, or crediting or transaction amount is limited when the service is provided for the user, or the like.

Embodiment 5 of the present application provides a solution for performing address validity authentication. In this solution, validity authentication is performed on an address, whether the address actually exists is judged and thereby the service server terminal can perform risk identification on the service requested to be processed by the user based on the reality and validity of the address.

### Embodiment 5

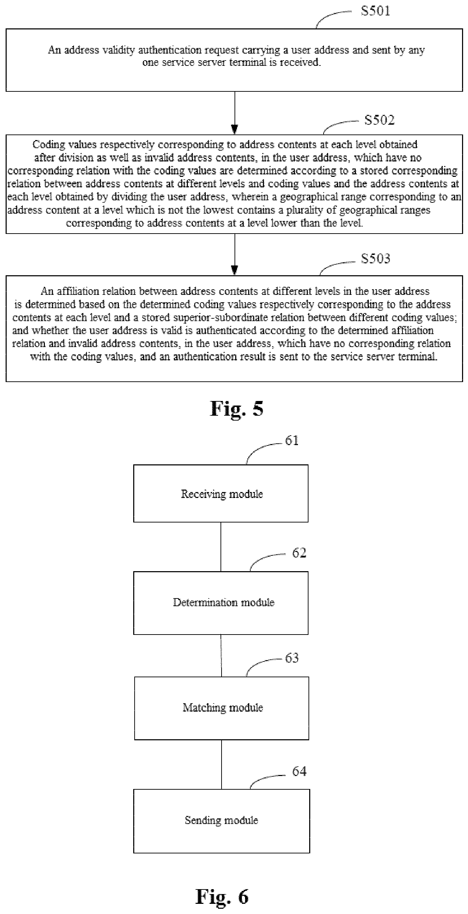

As illustrated in FIG. 5 which is a flowchart of a risk identification method provided by Embodiment 5 of the present application, the method comprises the following steps:
S501, an address validity authentication request carrying a user address and sent by any one service server terminal is received.
S502, coding values respectively corresponding to address contents at each level obtained after division as well as invalid address contents, in the user address, which have no corresponding relation with the coding values are determined according to a stored corresponding relation between address contents at different levels and coding values and the address contents at each level obtained by dividing the user address, wherein a geographical range corresponding to an address content at a level which is not the lowest contains a plurality of geographical ranges corresponding to address contents at a level lower than the level.

Herein, the user address is divided into a plurality of address contents at different levels and coding values corresponding to the address contents are sequentially determined. In this process, some address contents themselves possibly are invalid or are not recorded in an address information base in the embodiment of the present application, and thereby these address contents cannot correspond to coding values. At this moment, special characters may be adopted in address coding information obtained after mapping to identify these invalid address contents. For example, address coding information obtained after mapping of an address "XXX Road, Chaoyang District, Beijing" is 1001**, wherein Beijing corresponds to a coding value 10, Chaoyang District corresponds to a coding value 01 and XXX Road cannot correspond to a coding value in the address base, and special characters ** are adopted for identification to represent that XXX Road is an invalid address content.

S503, an affiliation relation between address contents at different levels in the user address is determined based on the determined coding values respectively corresponding to the address contents at each level and a stored superior-subordinate relation between different coding values; and whether the user address is valid is authenticated according to the determined affiliation relation and invalid address contents, in the user address, which have no corresponding relation with the coding values, and an authentication result is sent to the service server terminal.

Herein, validity authentication is performed on the user address based on the superior-subordinate relation between coding values and/or the invalid address content. For example, if certain address coding information is 1051**, wherein 10 represents Beijing, 51 represents Changning District and ** represents an invalid address content, since there is no superior-subordinate relation between the coding value 10 which represents Beijing and the coding value 51 which represents Changning District (Changning District itself is a district of Shanghai), the user address is invalid. After the server terminal learns that the address provided by the user is invalid, it can determine that the service requested by the user has a risk, may perform risk control for the user, and reject to provide a service for the user or limit a credit line/transaction amount, etc.

Based on the same inventive concept, the embodiment of the present application further provides an address matching-based risk identification apparatus corresponding to the address matching-based risk identification method. Since the principle used by the apparatus for solving the problem is similar to that of the address matching-based risk identification method provided by the embodiment of the present application, for the implementation of the apparatus, reference may be made to the implementation of the method and thus repeated parts are not repetitively described herein.

### Embodiment 6

As illustrated in FIG. 6 which is a schematic structural diagram of an address matching-based risk identification apparatus provided by Embodiment 6 of the present application, the apparatus comprises:
a receiving module 61 configured to receive risk authentication request information, the risk authentication request information comprising identity identification information of a user who requests processing of a service and first address coding information used for identifying a first address;
a determination module 62 configured to determine stored second address coding information corresponding to the identity identification information and used for identifying a second address; and
a matching module 63 configured to judge whether the first address is consistent with the second address by matching the first address coding information with the second address coding information, and perform risk identification according to the obtained address matching result.

Alternatively, the first address coding information and the second address coding information are address information which is identified by adopting numbers and/or letters.

Alternatively, the matching module 63 is further configured to:
when the address matching result is that the first address is not consistent with the second address, determine that the service requested to be processed by the user currently has a risk.

Alternatively, the identity identification information is fuzzified identity identification information, and the fuzzified identity identification information comprises partial information in each type of complete identity identification information in a plurality of types of complete identity identification information; and
the determination module 62 is specifically configured to:
judge whether user information matching the fuzzified identity identification information is stored; and if it is determined that the user information matching the fuzzified identity identification information is stored, extract the second address coding information from the user information.

Alternatively, the apparatus further comprises:
a sending module 64 configured to, if the determination module 62 determines that the user information matching the fuzzified identity identification information is not stored, feed back information which indicates that user matching fails.

Alternatively, the service is a network transaction service, the first address is a billing address and the second address is a logistic shipping address.

Alternatively, the determination module 62 is further configured to:
determine first credit record information corresponding to the first address coding information and second credit record information corresponding to the identity identification information; and determine risk rating information of the user used for performing risk identification based on the first credit record information and the second credit record information.

Alternatively, the first credit record information comprises one or more pieces of the following information:
address validity grade information of the first address indicated in the first address coding information;
information indicating whether a fraud case related to the first address occurs within a recent first set time length; and
information indicating at least one of occurrence times of fraud cases related to the first address within a recent second set time length, amounts of fraud cases related to the first address within a recent second set time length, and a quantity proportion of such cases in all fraud cases,
wherein the first set time length is smaller than the second set time length.

Alternatively, the second credit record information comprises one or more pieces of the following information:
information indicating whether the user is a blacklist user, the blacklist user being a user having a bad credit record;
information indicating whether the user has an association with a blacklist user;
information indicating whether the user has an association with a user having a fraud behavior within a recent third set time length;
information indicating whether the user has a fraud behavior or whether the user has an association with a fraud case; and
information indicating the number of server terminals through which the user applies for services within a recent fourth set time length.

Alternatively, the services are pre-loan application services or online application crediting services; the second credit record information comprises information indicating the number of server terminals through which the user applies for services within a recent fourth set time length; and
the determination module 62 is further configured to:
determine an application degree level, to which the number of server terminals through which the user applies for services within the recent fourth set time length belongs, for performing risk identification.

Alternatively, the receiving module 61 is further configured to, before the risk authentication request information is received, receive an address coding request carrying the first address; and
the determination module 62 is further configured to:
determine coding values respectively corresponding to address contents at each level obtained after division according to a stored corresponding relation between address contents at different levels and coding values and the address contents at each level obtained by dividing the first address, wherein a geographical range corresponding to an address content at a level which is not the lowest contains a plurality of geographical ranges corresponding to address contents at a level lower than the level; and combine the coding values respectively corresponding to the address contents at each level obtained after division in a descending order of the levels to form an address coding value corresponding to the first address, and feed back address coding information containing the address coding value.

Alternatively, the address coding information further contains address validity grade information; and
the determination module 62 is further configured to determine the address validity grade information according to the following steps:
determining an affiliation relation between address contents at different levels in the first address based on the coding values respectively corresponding to the address contents at each level in the first address and a stored superior-subordinate relation between different coding values; and
determining the address validity grade information of the first address according to the determined affiliation relation and invalid address contents, in the first address, which have no corresponding relation with the coding values.

### Embodiment 7

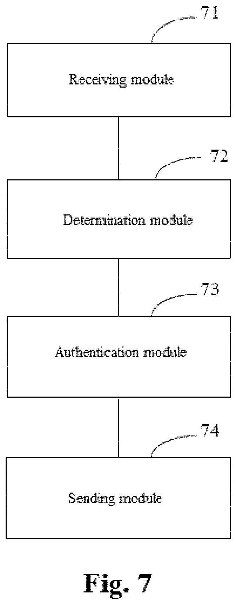

As illustrated in FIG. 7 which is a schematic structural diagram of an address matching-based risk identification apparatus provided by Embodiment 7 of the present application, the apparatus comprises:
a receiving module 71 configured to receive an address validity authentication request carrying a user address and sent by any one service server terminal;
a determination module 72 configured to determine coding values respectively corresponding to address contents at each level obtained after division according to a stored corresponding relation between address contents at different levels and coding values and the address contents at each level obtained by dividing the user address, wherein a geographical range corresponding to an address content at a level which is not the lowest contains a plurality of geographical ranges corresponding to address contents at a level lower than the level;
an authentication module 73 configured to determine an affiliation relation between address contents at different levels in the user address based on the determined coding values respectively corresponding to the address contents at each level and a stored superior-subordinate relation between different coding values; and authenticate whether the user address is valid according to the determined affiliation relation and invalid address contents, in the user address, which have no corresponding relation with the coding values; and
a sending module 74 configured to send an authentication result to the service server terminal.

One skilled in the art shall understand that the embodiments of the present application may be provided as methods, systems or computer program products. Therefore, the present application may adopt the form of full hardware embodiments, full software embodiments or embodiments combined with software and hardware. In addition, the present application may adopt the form of computer program products which are implemented on one or more computer-usable storage media (including but not limited to magnetic disk memories, CD-ROMs, optical memories and the like) containing computer-usable program codes.

The present application is described according to flowcharts and/or block diagrams of the methods, apparatuses (systems) and computer program products according to the embodiments of the present application. It shall be understood that each flow and/or block in the flowcharts and/or block diagrams and combinations of flows and/or blocks in the flowcharts and/or block diagrams may be implemented by computer program instructions. These computer program instructions may be provided to a general-purpose computer, a dedicated computer, an embedded processor or a processor of any other programmable data processing device to produce a machine, such that instructions executed through a computer or a processor of any other programmable data processing device produce an apparatus which is used for implementing functions specified in one or more flows of the flowcharts and/or one or more blocks of the block diagrams.

These computer program instructions may also be stored in a computer-readable memory which is capable of directing computers or other programmable data processing devices to operate in a specific manner so that the instructions stored in the computer-readable memory produce an article of manufacture including instruction means which can implement the functions specified in one or more flows of the flowcharts and/or one or more blocks of the block diagrams.

These computer program instructions may also be loaded to a computer or any other programmable data processing device so that a series of operation steps are executed by the computer or any other programmable device to realize computer-implemented processing and thus the instructions executed by the computer or any other programmable device provide steps for implementing the functions specified in one or more flows of the flowcharts and/or one or more blocks of the block diagrams.

Although the preferred embodiments of the present application have already been described, one skilled in the art, upon knowing the basic inventive concept, may make additional variations and modifications to these embodiments. Therefore, the attached claims are intended to be explained as including the preferred embodiments and all variations and modifications which fall into the scope of the present application.

Obviously, one skilled in the art may make various modifications and variations to the present application without departing from the spirt and scope of the present application. Thereby, if these modifications and variations made to the present application fall into the scope of the claims of the present application and equivalent technologies thereof, the present application is also intended to include these modifications and variations.

## Claims

1. An address matching-based risk identification method, comprising:
receiving risk authentication request information, the risk authentication request information comprising identity identification information of a user who requests processing of a service and first address coding information used for identifying a first address;
determining stored second address coding information corresponding to the identity identification information and used for identifying a second address; and
judging whether the first address is consistent with the second address by matching the first address coding information with the second address coding information, and performing risk identification according to the obtained address matching result.

2. The method according to claim 1, wherein the first address coding information and the second address coding information are address information which is identified by adopting numbers and/or letters.

3. The method according to claim 1, wherein the step of performing risk identification according to the obtained address matching result comprises:
when the address matching result is that the first address is not consistent with the second address, determining that the service requested to be processed by the user currently has a risk.

4. The method according to claim 1, wherein the identity identification information is fuzzified identity identification information, and the fuzzified identity identification information comprises partial information in each type of complete identity identification information in a plurality of types of complete identity identification information; and
the step of determining stored second address coding information corresponding to the fuzzified identity identification information comprises:
judging whether user information matching the fuzzified identity identification information is stored; and
if it is determined that the user information matching the fuzzified identity identification information is stored, extracting the second address coding information from the user information.

5. The method according to claim 4, wherein if it is determined that the user information matching the fuzzified identity identification information is not stored, the method further comprises:
feeding back information which indicates that user matching fails.

6. The method according to claim 1, wherein the service is a network transaction service, the first address is a billing address and the second address is a logistic shipping address.

7. The method according to claim 1, wherein the method further comprises:
determining first credit record information corresponding to the first address coding information and second credit record information corresponding to the identity identification information; and
determining risk rating information of the user used for performing risk identification based on the first credit record information and the second credit record information.

8. The method according to claim 7, wherein the first credit record information comprises one or more pieces of the following information:
address validity grade information of the first address indicated in the first address coding information;
information indicating whether a fraud case related to the first address occurs within a recent first set time length; and
information indicating at least one of occurrence times of fraud cases related to the first address within a recent second set time length, amounts of fraud cases related to the first address within a recent second set time length, and a quantity proportion of such cases in all fraud cases,
wherein the first set time length is smaller than the second set time length.

9. The method according to claim 7, wherein the second credit record information comprises one or more pieces of the following information:
information indicating whether the user is a blacklist user, the blacklist user being a user having a bad credit record;
information indicating whether the user has an association with a blacklist user;
information indicating whether the user has an association with a user having a fraud behavior within a recent third set time length;
information indicating whether the user has a fraud behavior or whether the user has an association with a fraud case; and
information indicating the number of server terminals through which the user applies for services within a recent fourth set time length.

10. The method according to any one of claims 7-9, wherein the services are pre-loan application services or online application crediting services; the second credit record information comprises information indicating the number of server terminals through which the user applies for services within a recent fourth set time length; and
the method further comprises:
determining an application degree level, to which the number of server terminals through which the user applies for services within the recent fourth set time length belongs, for performing risk identification.

11. The method according to claim 1, wherein before the step of receiving risk authentication request information, the method further comprises:
receiving an address coding request carrying the first address;
determining coding values respectively corresponding to address contents at each level obtained after division according to a stored corresponding relation between address contents at different levels and coding values and the address contents at each level obtained by dividing the first address, wherein a geographical range corresponding to an address content at a level which is not the lowest contains a plurality of geographical ranges corresponding to address contents at a level lower than the level; and
combining the coding values respectively corresponding to the address contents at each level obtained after division in a descending order of the levels to form an address coding value corresponding to the first address, and feeding back address coding information containing the address coding value.

12. The method according to claim 11, wherein the address coding information further contains address validity grade information; and
the address validity grade information is determined according to the following steps:
determining an affiliation relation between address contents at different levels in the first address based on the coding values respectively corresponding to the address contents at each level in the first address and a stored superior-subordinate relation between different coding values; and
determining the address validity grade information of the first address according to the determined affiliation relation and invalid address contents, in the first address, which have no corresponding relation with the coding values.

13. An address matching-based risk identification apparatus, comprising:
a receiving module configured to receive risk authentication request information, the risk authentication request information comprising identity identification information of a user who requests processing of a service and first address coding information used for identifying a first address;
a determination module configured to determine stored second address coding information corresponding to the identity identification information and used for identifying a second address; and
a matching module configured to judge whether the first address is consistent with the second address by matching the first address coding information with the second address coding information, and perform risk identification according to the obtained address matching result.

14. The apparatus according to claim 13, wherein the first address coding information and the second address coding information are address information which is identified by adopting numbers and/or letters.

15. The apparatus according to claim 13, wherein the matching module is specifically configured to:
when the address matching result is that the first address is not consistent with the second address, determine that the service requested to be processed by the user currently has a risk.

16. The apparatus according to claim 13, wherein the identity identification information is fuzzified identity identification information and the fuzzified identity identification information comprises partial information in each type of complete identity identification information in a plurality of types of complete identity identification information; and
the determination module is specifically configured to:
judge whether user information matching the fuzzified identity identification information is stored; and if it is determined that the user information matching the fuzzified identity identification information is stored, extract the second address coding information from the user information.

17. The apparatus according to claim 16, wherein the apparatus further comprises:
a sending module configured to, if the determination module determines that the user information matching the fuzzified identity identification information is not stored, feed back information which indicates that user matching fails.

18. The apparatus according to claim 13, wherein the service is a network transaction service, the first address is a billing address and the second address is a logistic shipping address.

19. The apparatus according to claim 13, wherein the determination module is further configured to:
determine first credit record information corresponding to the first address coding information and second credit record information corresponding to the identity identification information; and determine risk rating information of the user used for performing risk identification based on the first credit record information and the second credit record information.

20. The apparatus according to claim 19, wherein the first credit record information comprises one or more pieces of the following information:
address validity grade information of the first address indicated in the first address coding information;
information indicating whether a fraud case related to the first address occurs within a recent first set time length; and
information indicating at least one of occurrence times of fraud cases related to the first address within a recent second set time length, amounts of fraud cases related to the first address within a recent second set time length, and a quantity proportion of such cases in all fraud cases,
wherein the first set time length is smaller than the second set time length.

21. The apparatus according to claim 19, wherein the second credit record information comprises one or more pieces of the following information:
information indicating whether the user is a blacklist user, the blacklist user being a user having a bad credit record;
information indicating whether the user has an association with a blacklist user;
information indicating whether the user has an association with a user having a fraud behavior within a recent third set time length;
information indicating whether the user has a fraud behavior or whether the user has an association with a fraud case; and
information indicating the number of server terminals through which the user applies for services within a recent fourth set time length.

22. The apparatus according to any one of claims 19-21, wherein the services are pre-loan application services or online application crediting services; the second credit record information comprises information indicating the number of server terminals through which the user applies for services within a recent fourth set time length; and
the determination module is further configured to:
determine an application degree level, to which the number of server terminals through which the user applies for services within the recent fourth set time length belongs, for performing risk identification.

23. The apparatus according to claim 13, wherein the receiving module is further configured to, before the risk authentication request information is received, receive an address coding request carrying the first address; and
the determination module is further configured to:
determine coding values respectively corresponding to address contents at each level obtained after division according to a stored corresponding relation between address contents at different levels and coding values and the address contents at each level obtained by dividing the first address, wherein a geographical range corresponding to an address content at a level which is not the lowest contains a plurality of geographical ranges corresponding to address contents at a level lower than the level; and combine the coding values respectively corresponding to the address contents at each level obtained after division in a descending order of the levels to form an address coding value corresponding to the first address, and feed back address coding information containing the address coding value.

24. The apparatus according to claim 23, wherein the address coding information further contains address validity grade information; and
the determination module is further configured to determine the address validity grade information according to the following steps:
determining an affiliation relation between address contents at different levels in the first address based on the coding values respectively corresponding to the address contents at each level in the first address and a stored superior-subordinate relation between different coding values; and
determining the address validity grade information of the first address according to the determined affiliation relation and invalid address contents, in the first address, which have no corresponding relation with the coding values.
